Europäisches Patentamt

European Patent Office

Office européen des brevets

(19)

(11) **EP 1 158 276 A1**

(12) **EUROPÄISCHE PATENTANMELDUNG**

(43) Veröffentlichungstag:
28.11.2001 Patentblatt 2001/48

(51) Int Cl.⁷: **G01D 5/20**

(21) Anmeldenummer: 01111516.9

(22) Anmeldetag: 11.05.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **25.05.2000 DE 10026019**

(71) Anmelder: **Hella KG Hueck & Co.**
**59552 Lippstadt (DE)**

(72) Erfinder:
• **Irle, Henning**
**59557 Lippstadt (DE)**
• **Kost, Norbert**
**59590 Geseke (DE)**
• **Schmidt, Franz-Josef**
**33154 Salzkotten (DE)**

(54) **Induktiver Positionssensor**

(57) Beschrieben wird ein induktiver Positionssensor, mit einer Oszillatorschaltung, die ein periodisches Wechselspannungssignal erzeugt und in eine Erregerspule einkoppelt, mit mehreren Empfangsspulen, wobei die Erregerspule und die Empfangsspulen als Leiterbahnen auf einer Trägerplatte ausgebildet sind, mit einer Auswerteschaltung zur Auswertung der in den Empfangsspulen induzierten Signale und einem beweglichen induktiven Koppelelement, welches die Stärke der induktiven Kopplung zwischen Erregerspule und den Empfangsspulen beeinflußt, wobei die Auswerteschaltung innerhalb der Geometrie der Sende- und/oder Empfangsspulen angeordnet ist und wobei die wirksamen Flächen der Empfangsspulen im Anfangs- bzw. Endbereich des Sensors derart ausgebildet sind, daß sich bei nicht vorhandenem beweglichen Element an den Anzapfungen der Empfangsspulen die Summenspannung Null ergibt.

Fig 8

EP 1 158 276 A1

**Beschreibung**

Die Erfindung betrifft einen induktiver Positionssensor, insbesondere für ein Kraftfahrzeug, mit einer Oszillatorschaltung, die ein periodisches Wechselspannungssignal erzeugt und in eine Erregerspule einkoppelt, mit mehreren Empfangsspulen, wobei die Erregerspule und die Empfangsspulen als Leiterbahnen auf einer Trägerplatte ausgebildet sind, mit einer Auswerteschaltung zur Auswertung der in den Empfangsspulen induzierten Signale und einem beweglichen induktiven Koppelelement, welches die Stärke der induktiven Kopplung zwischen Erregerspule und den Empfangsspulen beeinflußt.

Ein solcher Positionssensor ist aus der deutschen Patentanmeldung DE 197 38 836 A1 bekannt.

Das Prinzip des hier betrachteten Induktivsensors beruht auf der induktiven Auskopplung von Energie in ein bewegliches Element welches wiederum induktiv auf Empfangsleiterschleifen mit einer speziellen Geometrie zurückwirkt Die Geometrie der Empfangsleiterschleifen wurde so gewählt, daß die in der Empfangsleiterschleife induzierte Spannung von der Position des beweglichen Elements abhängt.

Bei den heutigen Systemen und Komponenten kommt dem Platzbedarf eine besondere Bedeutung zu. Bevorzugt werden in der Regel Lösungen mit einem möglichst geringen Platzbedarf. Dies gilt vor allem bei Anwendungen im Automobilbereich.

Ein Induktivsensor benötigt aber bestimmte Mindestflächen für die Sensorgeometrie, da die Signalspannung des Sensors letztendlich von den zur Verfügung stehenden Spulenflächen abhängt, und die Signalspannung nicht beliebig klein werden darf. Hinzu kommt, daß auch die Elektronik zusätzlichen Platz benötigt.

Die der Erfindung zugrundeliegende Aufgabenstellung war, einen induktiven Positionssensor zuschaffen, der besonders platzsparend aufgebaut ist.

Diese Aufgabe wird dadurch gelöst, daß die Auswerteschaltung innerhalb der Geometrie der Sende- und/ oder Empfangsspulen angeordnet ist und daß die wirksamen Flächen der Empfangsspulen im Anfangs- und/oder Endbereich des Sensors derart ausgebildet sind, daß sich bei nicht vorhandenem beweglichen Element an den Anzapfungen der Empfangsspulen die Summenspannung Null ergibt.

Der erste Teil der Lösung besteht somit darin, daß die Auswerteschaltung innerhalb der Geometrie der Sende- und/oder Empfangsspulen angeordnet ist. Hierdurch ergeben sich als Vorteile ein geringerer Platzbedarf des Sensoraufbaus und geringere Kosten durch eine kleinere Platine.

Dies führt jedoch zu einer unsymmetrischen Belastung des Sensors, da die für die Elektronik benötigen Pads, Leitungen und Bauteile induktiv wie partielle Kurzschlüsse wirken. Die Auswirkung ist, daß die von der Erregerspule in den Empfangsspulen induzierte Spannung ungleich Null wird und damit eine Offsetspannung an den Empfangsspulenanschlüssen entsteht. Im zweiten Lösungsschritt werden diese Offsetspannungen durch eine Anpassung der Geometrie der Empfangsspulen im Anfangs- bzw. Endbereich des Sensors kompensiert.

Im folgenden soll der Aufbau und die Funktionsweise des erfindungsgemäßen Sensors anhand der Zeichnung dargestellt und näher erläutert werden.

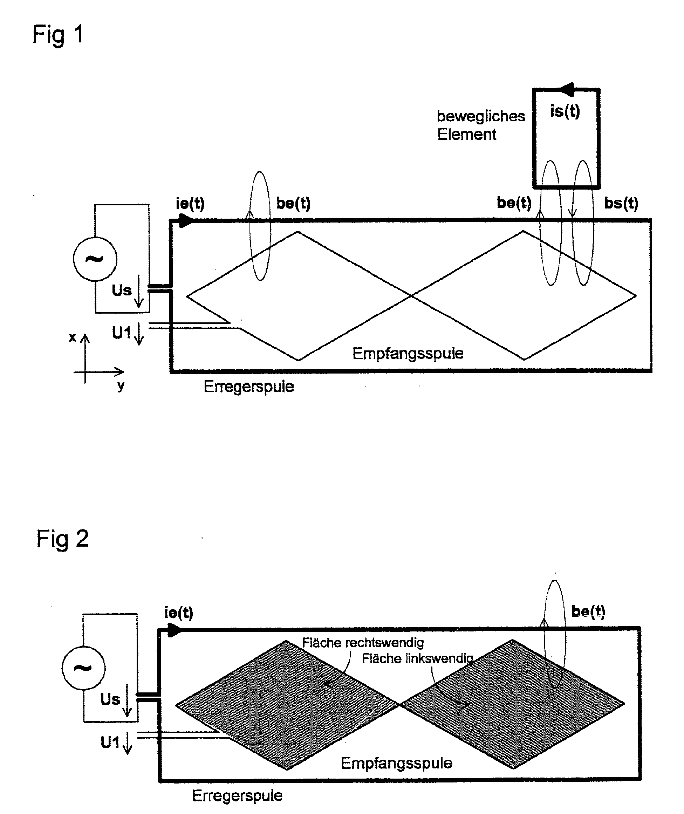

Die grundlegende Funktionsweise des Sensors wird durch die Figur 1 erläutert. Es ist anzumerken, daß das bewegliche Element sich in der Praxis über den Spulen befindet und hier aus Darstellungsgründen neben den Spulen dargestellt ist.

Die Erregerspule wird von einen Wechselstrom ie(t) durchflossen, der ein magnetisches Wechselfeld be(t) erzeugt. Das magnetische Wechselfeld be(t) induziert im beweglichen Element, das im einfachsten Fall aus einer geschlossenen Leiterschleife besteht, einen Strom is(t), der wiederum ein magnetisches Wechselfeld bs(t) erzeugt, das dem erregenden magnetischen Wechselfeld be(t) entgegengesetzt ist.

In der Empfangsspule wird von den überlagerten magnetischen Wechselfeldem be(t) + bs(t) über die Beziehung

$$U_1 = -\frac{d\Phi}{dt} = -\frac{d\int[b_e(t,x,y)+b_s(t,x,y)]dA}{dt} = \frac{d}{dt}\int b_e(t,x,y,)dA + \frac{d}{dt}\int b_s(t,x,y,)dA$$

eine Spannung induziert wobei A die Fläche der Empfangsspule darstellt. Zu beachten ist dabei, daß die Empfangsspule genaugenommen aus zwei Flächen mit entgegengesetzter Richtung der Flächennormalen besteht. Dies führt dazu, daß bei der hier dargestellten symmetrischen Empfangsgeometrie der durch die Erregerspule hervorgerufenen Anteil der induzierten Spannung zu Null wird (siehe Figur 2)
d.h.

$$\frac{d}{dt}\int b_e(t,\ x,\ y,)dA = 0$$

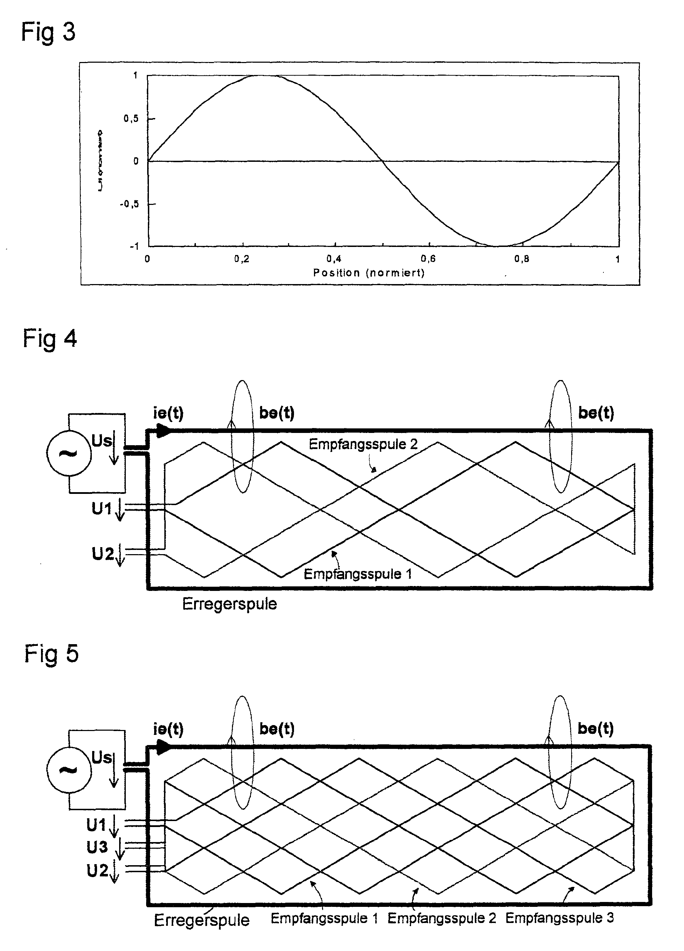

Übrig bleibt, idealisiert betrachtet, nur die durch das bewegliche Element induzierte Spannung, die über die Position des beweglichen Elements sinusförmig variiert. Zur Verdeutlichung ist in der Figur 3 die normierte Spannungsamplitude einer Empfangsspule gegen die ebenfalls normierte Position des beweglichen Elements aufgetragen.

Das bis hierher beschriebene Sensorprinzip ist an sich bereits funktionsfähig, störend ist jedoch, daß jede Veränderung des Erregerstroms sowie jede Veränderung der mechanischen Größen (Abstand, Winkel, Neigung des beweglichen Elements zur Empfangsspule) Einfluß auf das Ausgangssignal hat. Dies läßt sich jedoch verbessern, wenn eine zweite, zur ersten Empfangsspule versetzte, Empfangsspule genutzt wird und das Ausgangssignal nicht direkt, sondern durch eine Verhältnisbildung der beiden Nutzsignale gebildet wird. Der prinzipielle Aufbau ist in der Figur 4 dargestellt. Durch die Verhältnisbildung wird das Ausgangssignal unabhängig von den oben beschriebenen Einflüssen.

Bei einem Sensor wird in der Regel eine lineare Abhängigkeit zwischen zu erfassender Position und Ausgangssignal gewünscht. Da die Ausgangssignale der Empfangsspulen ($U_1$ , $U_2$) jedoch nichtlinear sind, ist auch das durch eine einfache Verhältnisbildung berechnete Ausgangssignal nichtlinear. Dies läßt sich jedoch verbessern, wenn nur der näherungsweise lineare Bereich der Ausgangssignal in der Nähe des Nulldurchgangs genutzt wird. Damit die genutzten Bereiche ausreichend linear sind, müssen, je nach Genauigkeitsanforderungen, weitere gegeneinander versetzte Empfangsspulen genutzt werden. In der Figur 5 ist, der Einfachheit halber, ein Sensor mit nur mit drei Empfangsspulen dargestellt.. Das Prinzip läßt sich jedoch auch auf mehr Empfangsspulen übertragen.

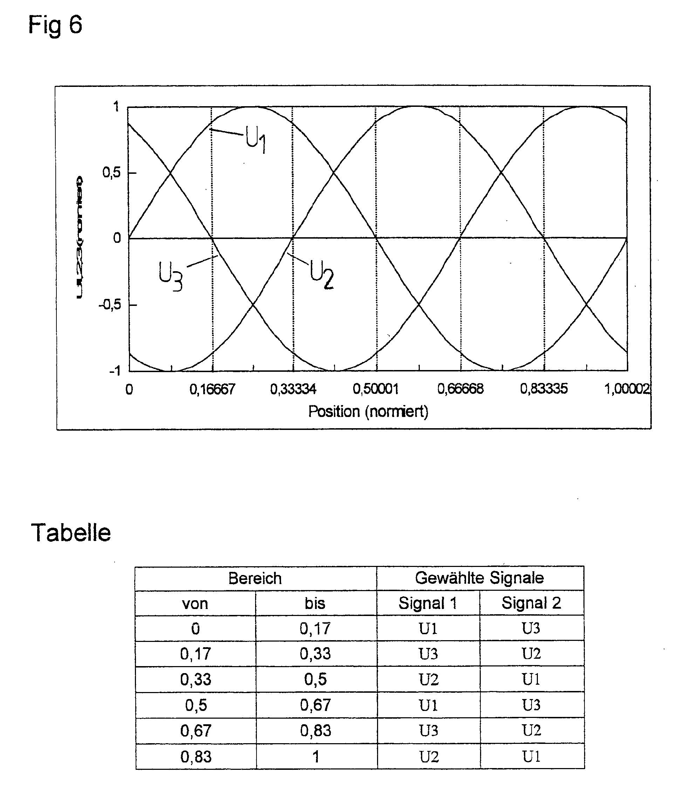

Die normierten Ausgangssignale (U1, U2, U3) der drei Empfangsspulen sind in der Figur 6, und zwar wiederum gegenüber der normierten Position des beweglichen Elementes aufgetragen.

Von diesen drei Ausgangssignalen werden für jeden Bereich die zwei in der Nähe des Nulldurchgangs befindlichen Signale ausgewählt und zur Verhältnisbildung genutzt. Dieses Auswahlprinzip wird durch die Tabelle verdeutlicht.

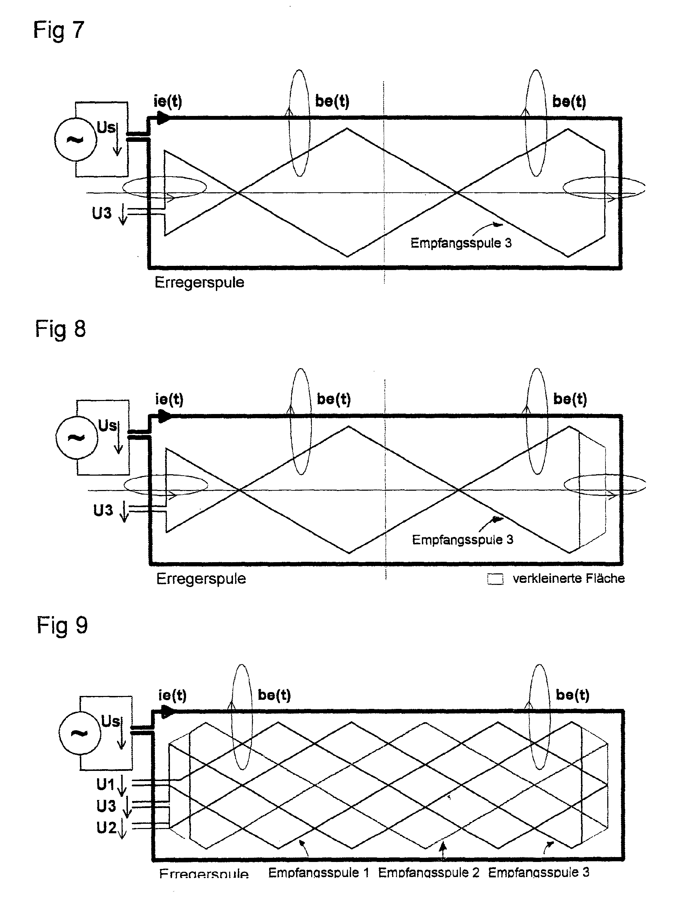

Dadurch, daß aber jetzt mehrere gegeneinander versetzte Empfangsspulen benötigt werden, entsteht das Problem, daß die von der Erregerspule in den Empfangsspulen induzierte Spannung nicht mehr vernachlässigbar ist wie im folgenden an der Empfangsspule 3 gezeigt werden soll (siehe Figur 7).

Der von den Längsseiten der Erregerspule hervorgerufene Anteil der in der Empfangsspule 3 induzierten Spannung ergibt in der Summe Null, da die Empfangsspule symmetrisch zur Längsachse der Erregerspule liegt. Der von den Stirnseiten der Erregerspule hervorgerufene Anteil ist dagegen ungleich Null, da die Empfangsspule unsymmetrisch zur Querachse der Erregerspule liegt (genaugenommen ist $\frac{d}{dt}\int b_e(t,x,y,)dA \neq 0$ , wobei dA die von der Randkurve der Erregerspule 3 vorgegebene Fläche ist). Die durch die Erregerspule in einer Empfangsspule induzierte Spannung soll im folgenden Offsetspannung genannt werden.

Die induktive Kopplung zwischen der Erregerspule und der Empfangsspule ist nun wesentlich größer als die induktive Kopplung zwischen beweglichem Element und den Empfangsspulen. Dies führt dazu, daß die von dieser Unsymmetrie hervorgerufene Spannung an den Empfangsspulen ein Mehrfaches von der Spannung, die vom beweglichen Element eingekoppelt werden, beträgt. Dies bereitet aber Schwierigkeiten bei der weiteren Signalverarbeitung und führt außerdem zu einem erheblichen Meßfehler.

Um die durch die Unsymmetrie hervorgerufene Offsetspannung zu kompensieren. ist die wirksamen Flächen der Empfangsspulen im Anfangs- bzw. Endbereich des Sensors derart ausgebildet sind, daß sich bei nicht vorhandenem beweglichen Element an den Anzapfungen der Empfangsspulen die Summenspannung Null ergibt.

Dies kann auf einfache Weise dadurch geschehen, daß die wirksame Fläche der Empfangsspule gezielt verkleinert (bzw. an anderer Stelle vergrößert wird), was in der Figur 8 schematisch angedeutet ist.

Durch diese Verkleinerung der Fläche wird die Offsetspannung verringert und es kann ein Punkt gefunden werden bei dem $\frac{d}{dt}\int b_e(t,x,y,)dA = 0$ ist, d.h. daß die Offsetspannung gleich Null ist.

Normalerweise führt diese Vorgehensweise dazu, daß der maximale Meßweg des Sensors verringert wird. Dies liegt daran, daß im Anfangs- und Endbereich des Linearsensors größere Ungenauigkeit auftreten und durch die Verkleinerung der Fläche ebenfalls der Bereich zwischen Anfang und Ende des Sensors verkleinert wird. Die Ungenauigkeiten im Anfangs- und Endbereich rühren daher, daß ein Teil der vom beweglichen Element hervorgerufenen Magnetfelder an den Stirnseiten der Empfangsspulen "vorbeigeht", gewissermaßen also an der Endlichkeit der Empfangsspulen.

Bei der Verwendung von drei oder mehr Empfangsspulen ergibt sich jedoch die Möglichkeit nur die Flächen von den Empfangsspulen zu verkleinern, die im Anfangs-bzw. Endbereich nicht benötigt werden (zur Berechnung des Sensorsignals werden nur jeweils zwei Empfangsspulen benötigt). Dadurch wird dem Nachteil der Verkleinerung des Meßwegs entgegengewirkt.

In dem in der Figur 9 dargestellten Beispiel würde Empfangsspule 3 am rechten Ende und Empfangsspule 2 am linken Ende des Sensors verkleinert. Die Tabelle bestätigt, daß $U_3$ am rechten Ende des Sensors und $U_2$ am linken Ende des Sensors nicht benötigt wird.

Um die Übersichtlichkeit der Darstellung nicht zu beeinträchtigen, ist die Auswerteelektronik, die insbesondere aus einem oder mehreren integrierten Schaltkreisen bestehen kann, in der Zeichnung nicht dargestellt. Die Auswerteelektronik kann man sich, z.B. in der Figur 9, innerhalb des durch die Erregerspule umrandeten Bereichs angeordnet vorstellen, wobei die Spannungen $U_1$, $U_2$ und $U_3$ der Empfangsspulen direkt der Auswerteelektronik zugeführt werden. Die zuvor beschriebene Kompensation der Spulenspannungen berücksichtigt dabei die durch die Bauteile der Auswerteelektronik hervorgerufenen Offsetspannungen.

**Patentansprüche**

1. Induktiver Positionssensor, insbesondere für ein Kraftfahrzeug, mit einer Oszillatorschaltung, die ein periodisches Wechselspannungssignal erzeugt und in eine Erregerspule einkoppelt, mit mehreren Empfangsspulen, wobei die Erregerspule und die Empfangsspulen als Leiterbahnen auf einer Trägerplatte ausgebildet sind, mit einer Auswerteschaltung zur Auswertung der in den Empfangsspulen induzierten Signale und einem beweglichen induktiven Koppelelement, welches die Stärke der induktiven Kopplung zwischen Erregerspule und den Empfangsspulen beeinflußt,
   **dadurch gekennzeichnet,**
   **daß** die Auswerteschaltung innerhalb der Geometrie der Sende- und/oder Empfangsspulen angeordnet ist und daß die wirksamen Flächen der Empfangsspulen im Anfangs- und/oder Endbereich des Sensors derart ausgebildet sind, daß sich bei nicht vorhandenem beweglichen Element an den Anzapfungen der Empfangsspulen die Summenspannung Null ergibt.

2. Induktiver Positionssensor nach Anspruch 1, **dadurch gekennzeichnet, daß** mindestens eine Fläche der Empfangsspule(n) im Anfangs- und/oder Endbereich des Sensors gegenüber dem Flächenmaß der Empfangsspulen im mittleren Bereich des Sensors verkleinert ist/sind, und zwar insbesondere bei denjenigen Empfangsspulen, deren Signale im Anfangs- und Endbereich des Sensors zur Berechnung des Ausgangssignals nicht benötigt werden.

Fig 1

Fig 2

## Fig 3

## Fig 4

## Fig 5

Fig 6

Tabelle

| Bereich | | Gewählte Signale | |
|---|---|---|---|
| von | bis | Signal 1 | Signal 2 |
| 0 | 0,17 | U1 | U3 |
| 0,17 | 0,33 | U3 | U2 |
| 0,33 | 0,5 | U2 | U1 |
| 0,5 | 0,67 | U1 | U3 |
| 0,67 | 0,83 | U3 | U2 |
| 0,83 | 1 | U2 | U1 |

Fig 7

ie(t)  be(t)  be(t)

Us

U3

Empfangsspule 3

Erregerspule

Fig 8

ie(t)  be(t)  be(t)

Us

U3

Empfangsspule 3

Erregerspule  ☐ verkleinerte Fläche

Fig 9

ie(t)  be(t)  be(t)

Us

U1
U3
U2

Erregerspule  Empfangsspule 1  Empfangsspule 2  Empfangsspule 3

**Europäisches Patentamt**

# EUROPÄISCHER RECHERCHENBERICHT

Nummer der Anmeldung

EP 01 11 1516

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 011 389 A (ANDERMO NILS INGVAR ET AL) 4. Januar 2000 (2000-01-04)<br>* Spalte 7, Zeile 61 - Zeile 62 *<br>* Spalte 10, Zeile 59 - Zeile 63 *<br>* Spalte 11, Zeile 57 - Zeile 60 *<br>* Spalte 13, Zeile 12 - Zeile 34 *<br>* Spalte 16, Zeile 14 - Zeile 19 *<br>* Spalte 16, Zeile 24 - Spalte 17, Zeile 8 *<br>* Spalte 19, Zeile 44 - Spalte 50 *<br>* Abbildungen 1,5A,10C,12A,13,14,20 *<br>----- | 1,2 | G01D5/20 |

| RECHERCHIERTE SACHGEBIETE (Int.Cl.7) |
|---|
| G01D |

Der vorliegende Recherchenbericht wurde für alle Patentansprüche erstellt

| Recherchenort | Abschlußdatum der Recherche | Prüfer |
|---|---|---|
| DEN HAAG | 30. August 2001 | Lut, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 11 1516

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-08-2001

| Im Recherchenbericht angeführtes Patentdokument | Datum der Veröffentlichung | Mitglied(er) der Patentfamilie | Datum der Veröffentlichung |
|---|---|---|---|
| US 6011389 A | 04-01-2000 | CN 1157910 A<br>EP 0743508 A<br>JP 8313295 A | 27-08-1997<br>20-11-1996<br>29-11-1996 |

EPO FORM P0461

Für nähere Einzelheiten zu diesem Anhang : siehe Amtsblatt des Europäischen Patentamts, Nr.12/82